# EUROPÄISCHE PATENTSCHRIFT

(11) **EP 1 288 695 B1**
(45) Veröffentlichungstag und Bekanntmachung des Hinweises auf die Patenterteilung: **28.12.2005**
(21) Anmeldenummer: 02017393.6
(22) Anmeldetag: 02.08.2002
(51) Int. Cl.: G02B 23/16

(54) **Teleskop mit geneigtem Einblick**
Telescope with tilted viewing system
Télescope avec dispositif de visée incliné

(30) Priorität: 14.08.2001 DE 10139806
(43) Veröffentlichungstag der Anmeldung: 05.03.2003
(73) Patentinhaber: SWAROVSKI OPTIK KG, 6067 Absam i. Tirol (AT)
(72) Erfinder: Swarovski, Gerhard, 6112 Wattens (AT)
(74) Vertreter: Kador, Ulrich

(56) Entgegenhaltungen:
- WO-A-96/26415
- GB-A- 2 308 676
- US-A- 2 013 549
- US-A- 5 121 220
- US-A- 5 923 467

## Beschreibung

Die Erfindung bezieht sich auf ein Teleskop mit geneigtem Einblick zur Sichtachse mit einer am Teleskopgehäuse befestigbaren Halterung für eine Visiereinrichtung nach dem Oberbegriff des Anspruchs 1.

Da Teleskope, besonders bei großer Vergrößerung, nur ein geringes Sehfeld besitzen, bereitet es für manche Anwender Schwierigkeiten, das mit freiem Auge sichtbare Objekt mit dem Teleskop zu finden. Aus W096/26415 ist daher bereits ein Teleskop mit geneigtem Einblick bekannt, bei dem über dem Okular eine rahmenförmige Visiereinrichtung vorgesehen ist, die an dem geneigten Abschnitt des Gehäuses des Teleskops befestigt ist.

Für viele Anwender, die keine Probleme haben, das Objekt mit dem Teleskop zu finden, ist die Visiereinrichtung an dem Teleskop nur störend. Auch läßt das Auffinden des Objekts mit der bekannten Visiereinrichtung noch zu wünschen übrig.

Nach US 5 121 220 ist die als Zieleinrichtung ausgebildete Visiereinrichtung mit einem Haltearm am Teleskopgehäuse befestigt, und zwar durch Aufnahme in einem gabelförmigen Lager am Teleskopgehäuse und mit einem Bolzen, der das Lager und das Ende des Haltearms durchsetzt. Die vielen Anwender, die keine Probleme haben, das Objekt mit dem Teleskop zu finden und die eine Visiereinrichtung daher stört, müssen bei dem bekannten Teleskop den Bolzen entfernen, um den Haltearm mit der Visiereinrichtung zu lösen, wobei das am Teleskopgehäuse seitlich wegstehende gabelförmige Lager dann bloß noch stört. Die einklappbare Visierhilfe nach WO 96/26415 stellt an einem Teleskop für diese Anwender ebenfalls nur einen unnötigen, störenden Fremdkörper dar.

Aufgabe der Erfindung ist es, eine Visiereinrichtung bereitzustellen, die für Anwender, die entsprechende Probleme haben, das Auffinden des Objekts mit dem Teleskop wesentlich erleichtert, jedoch bei Anwendern ohne solche Probleme auch ohne weiteres weggelassen werden kann.

Dies wird erfindungsgemäß mit dem im Anspruch 1 gekennzeichneten Teleskop erreicht.

Bei dem erfindungsgemäßen Teleskop ist die Visiereinrichtung zum Einstecken am Teleskopgehäuse ausgebildet. Damit kann der Anwender je nach Belieben die Visiereinrichtung einsetzen oder auch weglassen. Die Visiereinrichtung ist dabei seitlich an dem Okulartubus angeordnet.

Die Visiereinrichtung weist eine zur Sichtachse des Teleskops parallele Visierlinie auf. Sie kann beispielsweise durch eine Kimme mit Korn gebildet oder als zur Sichtachse parallele Leiste oder Rohr ausgebildet sein. Die Visierlänge kann beispielsweise 2 bis 10 cm betragen. Falls als Visiereinrichtung ein Rohr oder gegebenenfalls zwei im Abstand angeordnete Ringe verwendet werden, kann der Innendurchmesser z.B. 2 bis 5 mm betragen. Desgleichen kann die Visiereinrichtung durch eine optische Zieleinrichtung, also ein Sucherfernrohr mit geringerer Vergrößerung und großem Sehfeld gebildet werden.

Die Visiereinrichtung kann für monokulare oder binokulare Teleskope eingesetzt werden. Die Ausnehmung zum Einstecken der Halterung der Visiereinrichtung ist seitlich, also rechts oder links am Teleskopgehäuse vorgesehen, und zwar an dem geneigten Abschnitt des Teleskopgehäuses. Da auch die Visiereinrichtung seitlich angeordnet ist, kann damit die Halterung kurz und stabil ausgebildet werden. Ferner ist vorzugsweise die Ausnehmung, in die der Vorsprung an der Halterung gesteckt wird, in der Stirnwand des geneigten Gehäuseabschnitts vorgesehen, also in der Stirnwand, die die Öffnung umschließt, in die der Okulartubus gesteckt ist. Es ist jedoch auch denkbar, die Ausnehmung zum Einstecken des Vorsprungs an dem Okulartubus vorzusehen.

Besonders bevorzugt wird die Ausnehmung zum Einstecken des Vorsprungs zwischen dem geneigten Gehäuseabschnitt und dem Okulartubus angebracht, und zwar derart, daß es sich als Nut von der Stirnwand entlang der Innenseite des geneigten Gehäuseabschnitts erstreckt. Eine solche Nut ist leicht herstellbar.

Um die Fixierung der Halterung der Visiereinrichtung zu verbessern, weist die Halterung vorzugsweise zwischen dem Vorsprung und der Visiereinrichtung eine Auflagefläche auf, die auf der Stirnwand des geneigten Gehäuseabschnitts aufliegt, wenn der Vorsprung in die Ausnehmung gesteckt worden ist. Zusätzlich ist es vorteilhaft, den Vorsprung an der dem Okulartubus zugewandten Seite konkav auszubilden, so daß er an dem Okulartubus anliegt, wenn er in die Ausnehmung gesteckt ist. Weiterhin ist es zur Positionierung und Fixierung der Visiereinrichtung vorteilhaft, wenn die dem Okulartubus zugewandte Stirnfläche der Auflagefläche mit einer konkaven Ausnehmung versehen ist, damit sie an dem Okulartubus anliegt.

Die Visiereinrichtung und die Halterung sind vorzugsweise einstückig ausgebildet, insbesondere durch ein Kunststoffteil, beispielsweise ein Spritzgußteil.

Nachstehend ist das erfindungsgemäße Teleskop anhand der Zeichnung beispielhaft näher erläutert. Darin zeigen:
- Figur 1 und 2:: schematisch eine Seitenansicht bzw. eine Ansicht der Rückseite des Teleskops mit der Visiereinrichtung und dem Okulartubus im montierten Zustand;
- Figur 3 und 4:: schematisch der Figur 1 und 2 entsprechende Ansicht, jedoch während der Montage der Visiereinrichtung und des Okulartubus; und
- Figur 5 und 6:: eine Seitenansicht bzw. Draufsicht auf eine Visiereinrichtung, die jedoch im Gegensatz zu Figur 1 bis 4 auf der rechten Seite des Okulartubus eingesteckt wird.

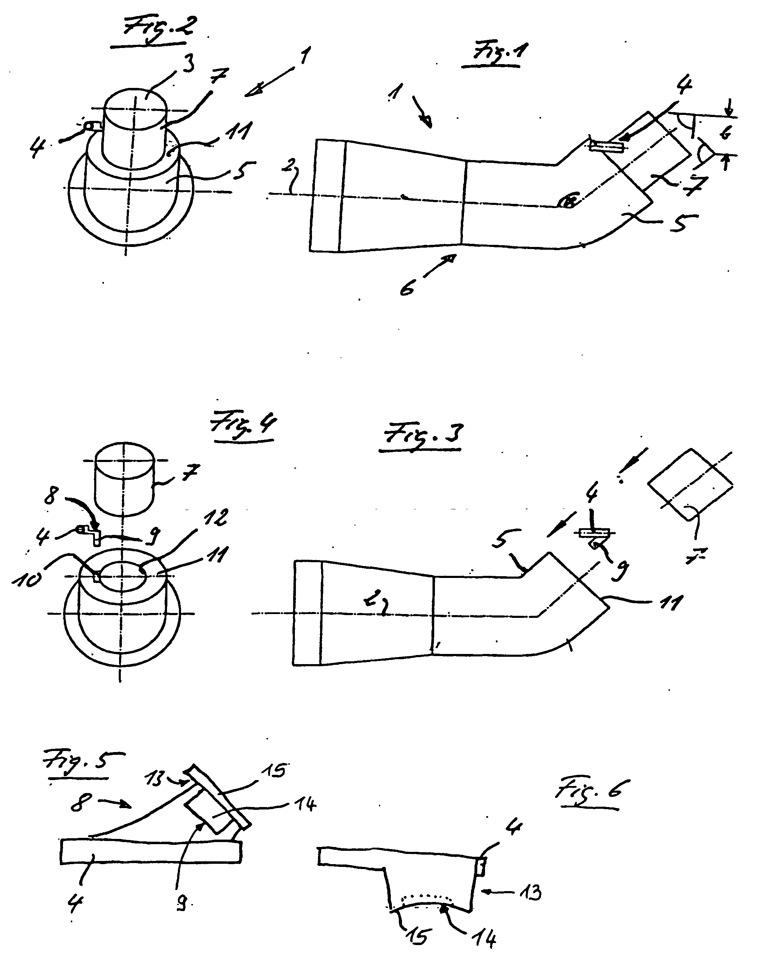

Gemäß Figur 1 bis 4 weist ein Teleskop 1 ein im Winkel α zur Sichtachse 2 geneigtes Okular 3 zum geneigten Einblick auf. Da Teleskope, besonders bei großer Vergrößerung, nur ein geringes Sehfeld besitzen, und es daher Schwierigkeiten bereitet, das mit freiem Auge sichtbare Objekt mit dem Teleskop 1 zu finden, weist es eine Visiereinrichtung 4 auf.

Die Visiereinrichtung 4 ist durch ein Rohr mit einer Länge von etwa 4 cm und einem Innendurchmesser von etwa 3 mm gebildet, das parallel zur Sichtachse 2 verläuft.

Die Visiereinrichtung 4 ist seitlich an dem geneigten Abschnitt 5 des Teleskopgehäuses 6 bzw. am Tubus 7 des Okulars 3 angeordnet. Dadurch ist der Abstand b zwischen dem Einblick in die Visiereinrichtung 4 bzw. in das Teleskop 1 gering.

Die Visiereinrichtung 4 weist eine Halterung 8 auf, welche mit einem Vorsprung 9 versehen ist, der in eine Ausnehmung 10 gesteckt wird, die an der Stirnwand 11 des Teleskopgehäuses 6 vorgesehen ist, also der Stirnwand 11 am geneigten Abschnitt 5, welche sich um die Öffnung 12 erstreckt, in die der Okulartubus 7 gesteckt wird. Von der Stirnwand 11 erstreckt sich die Ausnehmung 10 in Form einer Nut entlang der Innenseite des geneigten Gehäuseabschnitts 5, d.h. der in die Ausnehmung 10 gesteckte Vorsprung 9 ist zwischen dem geneigten Gehäuseabschnitt 5 und dem Okulartubus 7 befestigt.

Die Visiereinrichtung 4 und die Halterung 8 mit dem Vorsprung 9 bestehen vorzugsweise aus einem Teil, insbesondere einem Kunststoffteil.

Wie insbesondere aus Figur 4 und 5 ersichtlich, weist die Halterung 8 zwischen dem Vorsprung 9 und der Visiereinrichtung 4 eine Auflagefläche 13 auf, die auf der Stirnwand 11 des geneigten Gehäuseabschnitts 5 aufliegt, wenn der Vorsprung 9 in die Ausnehmung 10 gesteckt ist. Damit der Vorsprung 9 am Okulartubus 7 anliegt, ist er auf der dem Okulartubus 7 zugewandten Seite 14 konkav ausgebildet, wie in Figur 6 gestrichelt dargestellt. Ebenso weist die Auflagefläche 13 an der dem Okulartubus 7 zugewandten Stirnfläche 15 eine konkave Ausnehmung zur Anlage an dem Okulartubus 7 auf.

## Patentansprüche

1. Teleskop mit geneigtem Einblick zur Sichtachse und mit einer Visier einrichtung (4) sowie einer am Teleskopgehäuse (6) befestigbaren Halterung (8) für die Visiereinrichtung (4), **dadurch gekennzeichnet, dass** die Visiereinrichtung (4) seitlich am Teleskopgehäuse (6) angeordnet ist und die Halterung (8) einen Vorsprung (9) zum Einstecken in eine Ausnehmung (10) an dem geneigten Abschnitt (5) des Einblicks am Teleskopgehäuse (6) aufweist, der den Okulartubus (7) des Teleskops aufnimmt.

2. Teleskop nach Anspruch 1, **dadurch gekennzeichnet, dass** die zur Sichtachse (2) parallele Visiereinrichtung (4) Kimme und Korn aufweist oder als zur Sichtachse (2) parallele Leiste oder Rohr oder als eine optische Zieleinrichtung mit geringer Vergrößerung ausgebildet ist.

3. Teleskop nach Anspruch 1, **dadurch gekennzeichnet, dass** die Ausnehmung (10) in der Stirnwand (11) des geneigten Gehäuseabschnitts (5) vorgesehen ist.

4. Teleskop nach Anspruch 1, **dadurch gekennzeichnet, dass** die Ausnehmung (10) zwischen dem geneigten Gehäuseabschnitt (5) und dem Okulartubus (7) vorgesehen ist.

5. Teleskop nach Anspruch 3 oder 4, **dadurch gekennzeichnet, dass** die Ausnehmung durch eine sich von der Stirnwand (11) des geneigten Gehäuseabschnitts (5) erstreckende Nut an der Innenseite des geneigten Gehäuseabschnitts (5) gebildet wird.

6. Teleskop nach Anspruch 3 bis 5, **dadurch gekennzeichnet, dass** die Halterung (8) zwischen dem Vorsprung (9) und der Visiereinrichtung (4) eine Auflagefläche (13) aufweist, die bei in die Ausnehmung (10) gestecktem Vorsprung (9) auf der Stirnwand (11) des geneigten Gehäuseabstandes (5) aufliegt.

7. Teleskop nach einem der vorstehenden Ansprüche, **dadurch gekennzeichnet, dass** der Vorsprung (9) auf der dem Okulartubus (7) zugewandten Seite (14) konkav ausgebildet ist.

8. Teleskop nach einem der vorstehenden Ansprüche, **dadurch gekennzeichnet, dass** die Auflagefläche (13) eine dem Okulartubus (7) zugewandte Stirnfläche (15) mit einer konkaven Ausnehmung aufweist.

9. Teleskop nach einem der vorstehenden Ansprüche, **dadurch gekennzeichnet, dass** die Halterung (8) und die Visiereinrichtung (4) einstückig ausgebildet sind.

10. Teleskop nach Anspruch 9, **dadurch gekennzeichnet, dass** die Halterung (8) und die Visiereinrichtung (4) durch ein Kunststoffteil gebildet sind.

## Claims

1. Telescope with inclined viewing relative to the sight axis and with a sighting device (4) and also a mounting (8) for the sighting device (4) which can be secured to the telescope housing (6), **characterized in that** the sighting device (4) is arranged laterally on the telescope housing (6) and the mounting (8) has a projection (9) for insertion into a recess (10) on the inclined portion (5) of the viewing on the telescope housing (6), which receives the eyepiece tube (7) of the telescope.

2. Telescope according to claim 1, **characterized in that** the sighting device (4) parallel to the sight axis (2) has a notch and bead or is formed as a strip or tube parallel to the sight axis (2) or as an optical aiming device with small magnification.

3. Telescope according to claim 1, **characterized in that** the recess (10) is provided in the front wall (11) of the inclined housing portion (5).

4. Telescope according to claim 1, **characterized in that** the recess (10) is provided between the inclined housing portion (5) and the eyepiece tube (7).

5. Telescope according to claim 3 or 4, **characterized in that** the recess is formed by a groove extending from the front wall (11) of the inclined housing portion (5) on the inside of the inclined housing portion (5).

6. Telescope according to claim 3 to 5, **characterized in that** the mounting (8) between the projection (9) and the aiming device (4) has a bearing surface (13) which rests on the front wall (11) of the inclined housing portion (5) when the projection (9) is inserted into the recess (10).

7. Telescope according to one of the previous claims, **characterized in that** the projection (9) is formed concave on the side (14) facing the eyepiece tube (7).

8. Telescope according to one of the previous claims, **characterized in that** the bearing surface (13) has a frontal area (15) facing the eyepiece tube (7) with a concave recess.

9. Telescope according to one of the previous claims, **characterized in that** the mounting (8) and the aiming device (4) are formed in one piece.

10. Telescope according to claim 9, **characterized in that** the mounting (8) and the aiming device (4) are formed by a plastic part.

## Revendications

1. Télescope comportant un monoculaire incliné par rapport à l'axe de visée et un dispositif de visée (4) ainsi qu'un dispositif de retenue (8) pouvant être fixé sur le boîtier (6) du télescope, pour le dispositif de visée (4), **caractérisé en ce que** le dispositif de visée (4) est disposé latéralement sur le boîtier (6) du télescope et le dispositif de retenue (8) comporte une partie saillante (9) destinée à être enfichée dans un évidement (10) prévu sur la section inclinée (5) du monoculaire sur le boîtier (6) du télescope, qui loge le tube d'oculaire (7) du télescope.

2. Télescope selon la revendication 1, **caractérisé en ce que** le dispositif de visée (4) parallèle à l'axe de visée (2) comporte une mire et un guidon ou est agencé sous la forme d'une barrette ou d'un tube parallèle à l'axe de visée (2) ou sous la forme d'un dispositif de visée optique avec un faible grossissement.

3. Télescope selon la revendication 1, **caractérisé en ce que** l'évidement (10) est prévu dans la paroi frontale (11) de la section inclinée (5) du boîtier.

4. Télescope selon la revendication 1, **caractérisé en ce que** l'évidement (10) est prévu entre la section inclinée (5) du boîtier et le tube d'oculaire (7).

5. Télescope selon la revendication 3 ou 4, **caractérisé en ce que** l'évidement est formé par une rainure qui s'étend à partir de la paroi frontale (11) de la section inclinée (5) du boîtier, sur le côté intérieur de la section inclinée (5) du boîtier.

6. Télescope selon les revendications 3 à 5, **caractérisé en ce que** le dispositif de retenue (8) comporte entre la partie saillante (9) et le dispositif de visée (4), une surface d'appui (13) qui, lorsque la partie saillante (9) est enfichée dans l'évidement (10), prend appui sur la paroi frontale (11) de la section inclinée (5) du boîtier.

7. Télescope selon l'une des revendications précédentes, **caractérisé en ce que** la partie saillante (9) est agencée avec une forme concave sur le côté (14) tourné vers le tube d'oculaire (7).

8. Télescope selon l'une des revendications précédentes, **caractérisé en ce que** la surface d'application (13) comporte une surface frontale (15) tournée vers le tube d'oculaire (7) avec un évidement concave.

9. Télescope selon l'une des revendications précédentes, **caractérisé en ce que** le dispositif de retenue (8) et le dispositif de visée (4) sont agencés d'un seul tenant.

10. Télescope selon la revendication 9, **caractérisé en ce que** le dispositif de retenue (8) et le dispositif de visée (4) sont formés par une pièce en matière plastique.
